# DEMANDE DE BREVET EUROPEEN

(11) **EP 0 992 726 A1**
(43) Date de publication de la demande: **12.04.2000**
(21) Numéro de dépôt: 99402436.2
(22) Date de dépôt: 05.10.1999
(51) Int. Cl.: F16K 31/04, H01F 7/18

(54) **Agencement de valve à tiroir à débit contrôlé**

(30) Priorité: 07.10.1998 FR 9812572
(71) Demandeur: HYDROPERFECT INTERNATIONAL HPI, 94430 Chennevieres sur Marne (FR)
(72) Inventeur: Lesther, Nicaise, 94000 Creteil (FR); Grattery, Didier, 41100 Vendome (FR)
(74) Mandataire: Berger, Helmut

(57) **Abrégé**

L'invention concerne un agencement de valve à tiroir à débit contrôlé.

Cet agencement est du type comprenant une valve à tiroir mobile dans un corps de valve entre des position de fermeture et d'ouverture de la valve, un moteur électrique (1) de déplacement dudit tiroir entre lesdites positions de fermeture et d'ouverture, un dispositif électronique (2) de commande du moteur, une source (3) d'alimentation en énergie électrique du moteur et du dispositif électronique et des moyens de sécurité (10) assurant une fermeture ou ouverture de la valve dans le cas d'une déficience de ladite alimentation électrique. L'agencement est caractérisé en ce que les moyens de sécurité (10) sont intégrés au dispositif électronique (2) de commande du moteur (1).

L'invention est utilisable pour des valves à tiroir à débit contrôlé.

## Description

L'invention concerne un agencement de valve à tiroir à débit contrôlé, du type comprenant une valve à tiroir mobile dans un corps de valve entre des positions de fermeture et d'ouverture de la valve, un moteur électrique de déplacement dudit tiroir entre lesdites positions de fermeture et d'ouverture de la valve, un dispositif électronique de commande du moteur, une source d'alimentation en énergie électrique du moteur et du dispositif électronique et des moyens de sécurité assurant une fermeture ou ouverture de la valve dans le cas d'une déficience de ladite alimentation électrique.

Des agencements de ce type sont déjà connus et les moyens de sécurité sont intégrés à la valve et par exemple réalisés sous forme d'un système à ressort.

Or, l'intégration des moyens de sécurité à la valve complique la structure de celle-ci et la rend encombrante si bien que, par exemple, les valves bidirectionnelles, soient dépourvues de la fonction de sécurité susmentionnée.

La présente invention a pour but de résoudre ce problème en proposant un agencement de valve à tiroir qui est utilisable pour toutes les valves, sans augmenter leur complexité, ni leur encombrement.

Pour atteindre ce but, l'agencement selon l'invention est caractérisé en ce que les moyens de sécurité sont intégrés au dispositif électronique de commande du moteur.

Selon une caractéristique de l'invention, les moyens de sécurité comportent un réservoir d'énergie de secours et des moyens de connexion de ce réservoir au moteur de commande de la valve.

Selon une autre caractéristique de l'invention, le réservoir d'énergie est un dispositif de stockage d'énergie électrique ayant une capacité de stockage suffisante pour au moins assurer une fermeture ou ouverture complète de la valve, et une résistance interne suffisamment faible pour assurer l'ouverture ou fermeture rapide de la valve.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemples illustrant un mode de réalisation de l'invention et sur lesquels :
- la figure 1 est un schéma synoptique général de l'agencement selon l'invention, et
- la figure 2 est une vue schématique d'un mode de réalisation du réservoir d'énergie de secours de l'invention.

La présente invention concerne des valves à tiroir à débit contrôlé, du type comprenant une valve à tiroir mobile dans un corps de valve, sous la commande d'un moteur électrique, entre une position de fermeture de la valve et une position d'ouverture de celle-ci, notamment une valve telle que décrite dans la demande de brevet européen No 98 400 365.7 qui appartient à la demanderesse.

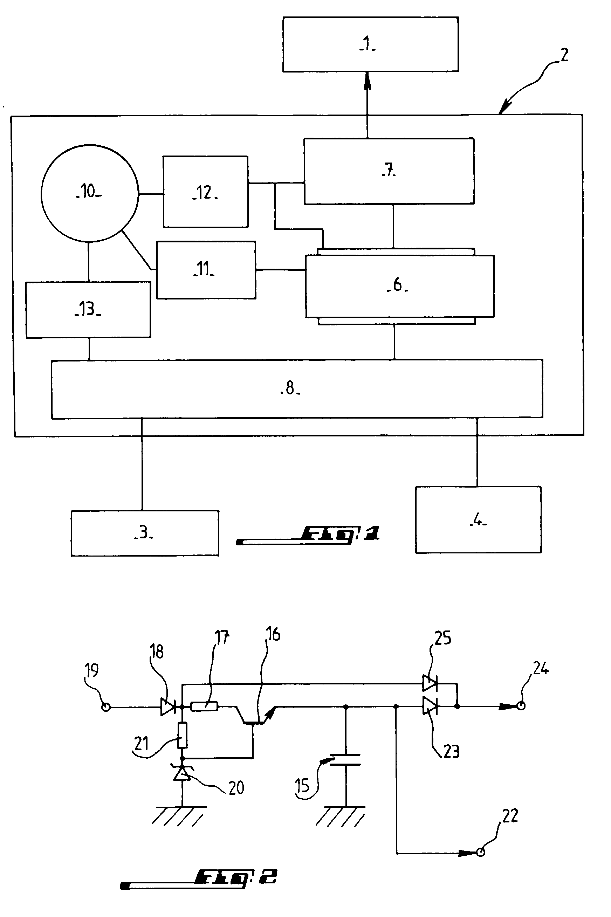

La figure 1 donne le synoptique général du système de commande d'une telle valve et indique en 1 le moteur de déplacement du tiroir de la valve, en 2 l'ensemble électronique de commande, avantageusement réalisé sous forme d'une carte électronique, en 3 une source extérieure d'alimentation en énergie électrique et en 4 un dispositif de commande extérieur. Le moteur 1 est avantageusement un moteur pas à pas mais peut être de tout autre type approprié. La source d'énergie extérieure 3 pourrait être du type à 24 volts et par exemple constituée d'un montage en série de deux batteries de 12 volts chacune. Enfin, la commande extérieure 4 pourrait être réalisée sous forme d'un bouton poussoir du type à potentiomètre ou sous tout autre forme appropriée.

L'agencement électronique 2 comporte un coeur numérique 6 tel qu'un microcontrôleur ou tout autre circuit programmable, un module interface de puissance 7 pour commander le moteur 1 et un interface d'entrées/sorties 8 auquel sont reliées la source d'énergie extérieure 3 et la commande extérieure 4. L'ensemble comporte en outre un réservoir d'énergie de secours 10 qui est relié par une interface de surveillance 11 au coeur numérique 6, par une interface d'alimentation de secours 12 au module d'interface de puissance 7 et par une interface de charge et d'alimentation interne 13 à l'interface d'entrées/sorties 8. On constate encore que la sortie de l'interface d'alimentation de secours 12 est reliée au coeur numérique 6.

Concernant le coeur numérique 6, il comporte un certain nombre de modules optionnels qui seront décrits ci-après. Certains de ces modules peuvent être fonctionnels en fonction de l'utilisation de la valve.

Le coeur comporte un module d'interface d'entrée reliée à l'interface 8, avec un filtre de protection contre des bruits intempestifs. Les entrées sont de deux types : analogique et numérique. L'entrée analogique est toutefois assistée par une entrée numérique qui donne une information relative au bouton du dispositif de commande 4. Cette information est prioritaire sur l'entrée analogique. Si le bouton est actionné, la consigne analogique est traitée. Si le bouton est relâché, c'est-à-dire si l'entrée numérique n'est pas active, l'entrée analogique n'est pas traitée et la valve est complètement fermée ou complètement ouverte selon l'application. L'entrée numérique peut être filtrée par échantillonnage. Il faut 50 msec d'échantillons identiques pour définir un niveau 1 ou 0. L'entrée analogique possède un filtre passe-bas ainsi qu'une hystérésis.

Le coeur numérique comporte en outre un module d'acquisition du niveau de batterie externe. Ce module sert de surveillance du niveau d'alimentation externe, par l'intermédiaire de l'interface d'entrées/sorties 8, afin de prendre des décisions de fermeture ou d'ouverture de la valve. Le coeur numérique 6 comporte également un module d'acquisition du niveau de charge du réservoir d'énergie 10, par l'intermédiaire de l'interface de surveillance 11. Ce module a pour rôle d'inhiber les consignes externes tant que le réservoir d'énergie n'est pas capable d'assurer l'alimentation pour la réalisation d'une ouverture ou d'une fermeture complète de la valve.

Le coeur numérique 6 comporte en outre un module de contrôle de l'interface 7 du moteur pas à pas. Ce module est chargé de respecter le protocole de gestion du moteur. Il intègre également une fonction de commande à découpage dépendant du niveau d'alimentation de la batterie. Cette fonction assure au système carte plus moteur pas à pas une vitesse de commande constante pour une consigne extérieure donnée indépendante du niveau de l'alimentation externe.

Le coeur 6 est en outre pourvu d'un module de protection du service moteur. Ce module est chargé de surveiller la consigne externe de la commande de la valve afin d'assurer le respect du service accepté par le moteur avec sa commande. En cas de dépassement, la protection se déclenche et le coeur numérique ne suit plus la consigne externe pour se caler au service maximum accepté par le moteur. Cette fonction agit comme un fusible à réarmement automatique, car une fois le temps de repos terminé le coeur numérique exécute à nouveau les consignes externes. Dans la phase de protection, la valve est complètement ouverte ou complètement fermée selon le type d'utilisation de celle-ci.

Le coeur numérique 6 comporte encore un module d'initialisation. Ce module a pour rôle d'initialiser tous les modules fonctionnels après la première alimentation de la carte. Il assure aussi deux autres fonctions liées au moteur et à la valve. Il effectue la recherche de la position zéro de la valve, qui est une position d'ouverture ou de fermeture complète. Cette fonction génère un nombre de pas supérieur à la course du tiroir de la valve pour initialiser la position zéro. Le module effectue aussi une initialisation de la valve en position fermée ou ouverte selon l'application.

Le coeur numérique 6 comporte en outre un module de sauvegarde batterie. Lorsque le moteur n'est pas sollicité et que l'alimentation de la carte est toutefois maintenue, ce module se charge de couper les consommateurs de la carte afin de réduire la consommation en courant et de ne pas vider les batteries externes.

Enfin le coeur numérique est équipé d'un module de traitement de l'entrée analogique. Ce module permet de transformer éventuellement sur la demande de l'utilisateur, l'entrée linéaire analogique en une entrée non linéaire. Cette transformation peut améliorer la sensation de progressivité lors de la commande de la valve. Il s'agit essentiellement d'adapter la commande de la valve à la forme de la commande externe qui peut être un bouton poussoir ou une manette de commande ou analogue.

Concernant le réservoir d'énergie de secours 5, tout dispositif de stockage d'énergie électrique peut être utilisé à cette fin, qui a une capacité de stockage suffisante pour au moins assurer une fermeture ou ouverture complète de la valve dans un temps relativement faible. On utilisera avantageusement, comme réservoir d'énergie de secours, un condensateur d'une capacité relativement élevée par exemple de l'ordre de 0,1 à 1 Farad et d'une résistance interne relativement faible. Un tel condensateur chargé à une tension de 12 volts peut assurer une fermeture de la valve en une période de temps de l'ordre de 0,5 sec. L'autre avantage d'un tel réservoir réside dans le fait qu'il peut fonctionner dans une large plage de températures pouvant aller de -30°C à +85°C. D'autre part, un tel réservoir présente un encombrement et un poids très faibles.

La figure 2 montre à titre d'exemple et schématiquement la structure d'un tel réservoir utilisant un condensateur. Celui-ci porte sur la figure 2 le numéro de référence 15 et est monté dans le circuit d'émetteur d'un transistor de chargement 16 dont le collecteur est relié par l'intermédiaire d'une résistance 17 et d'une diode 18 à une borne d'entrée 19 à laquelle est connecté l'interface de charge et d'alimentation interne 13. La base du transistor 16 est reliée au point de jonction d'une diode Zener 20 et d'une résistance 21 dont l'autre borne est reliée à la jonction de la diode 18 et de la résistance 17. Les bornes libres de la diode Zener 20 et du condensateur 15 sont mises à la masse. La borne du condensateur 15 qui est reliée à l'émetteur du transistor est reliée, d'une part, à une borne 22 de connexion à l'interface de surveillance 11 et, d'autre part, par l'intermédiaire d'une diode 23 à une borne 24 reliée à l'interface d'alimentation de secours 12. Enfin, une diode 25 est connectée entre la borne 24 et le point de jonction de la diode 18 et de la résistance 17. Les anodes des diodes 23 et 25 sont reliées l'une à l'autre et à la borne 24 et la diode 18 est montée en série avec la diode 25. Il est à noter que le condensateur 15 peut être chargé à travers le condensateur 16 à une tension de 12 volts, tandis que la tension à la borne d'entrée 19 est déterminée par la source d'alimentation externe 3 d'une valeur maximale avantageusement de 24 volts.

Le schéma 2 montre que l'alimentation en énergie électrique du moteur 1 et des modules de la carte 2 est assurée par la source d'alimentation externe 3 à travers les diodes 18 et 25 tant que le potentiel à l'entrée 19 du réservoir de secours 10 et ainsi à la borne de sortie 24 maintient la diode 23 à l'état non conducteur, la cathode de cette dernière étant au potentiel déterminé par la tension de charge du condensateur 15.

Par contre, lorsque le potentiel à l'entrée 19 baisse en dessous d'une valeur de seuil prédéterminée considérée comme étant significative d'une défaillance du système d'alimentation externe et à laquelle la diode 23 peut devenir conductrice, on utilise l'énergie stockée dans le condensateur 15 pour permettre au moteur 1 de déplacer le tiroir de la valve dans sa position de fermeture ou d'ouverture complète. Le condensateur assure aussi l'alimentation en énergie électrique des différents composants de l'ensemble électronique pendant cette période. Il est à noter que le réservoir de secours est inhibé par le coeur numérique tant que le réservoir, dans le cas présent le condensateur 15, ne soit pas à l'état chargé. L'interface de surveillance 11 qui est relié à la borne 22 permet au coeur numérique de surveiller l'état de charge du condensateur. Il est à noter que la fonction de sécurité, avec déplacement du tiroir de la valve dans sa position de fermeture ou d'ouverture, peut aussi déjà être accomplie avant la mise en service du réservoir de secours, dès que la tension d'alimentation extérieure est descendue en dessous d'une valeur de seuil prédéterminée de par exemple 16 volts.

Bien entendu à la place d'un réservoir formé essentiellement par un condensateur 15 peuvent être utilisés des réservoirs de tout autre type approprié tels que par exemple une batterie ou un accumulateur.

Pour compléter la description de l'agencement selon l'invention, l'interface d'entrée/sortie 8 est conçue pour assurer la mise en forme des signaux électriques entre l'extérieur de la carte 2 et l'intérieur. Les entrées sont protégées contre les EMS et EST et les sorties contre les courts-circuits. Les entrées/sorties peuvent prendre différentes formes. On pourrait ainsi prévoir en plus de deux entrées d'alimentation, deux sorties respectivement de + volt et de masse, protégées pour l'alimentation d'un système de consigne, par exemple la base de potentiomètre, une entrée numérique indiquant l'activation du bouton de commande ou de la manette de commande et une entrée analogique représentant la consigne de position de la valve.

## Revendications

1. Agencement de valve à tiroir à débit contrôlé, du type comprenant une valve à tiroir mobile dans un corps de valve entre des positions de fermeture et d'ouverture de la valve, un moteur électrique de déplacement dudit tiroir entre lesdites positions de fermeture et d'ouverture, un dispositif électronique de commande du moteur, une source d'alimentation en énergie électrique du moteur et du dispositif électronique et des moyens de sécurité assurant une fermeture ou ouverture de la valve dans le cas d'une déficience de ladite alimentation électrique, caractérisé en ce que les moyens de sécurité (10) sont intégrés au dispositif électronique (2) de commande du moteur (1).

2. Agencement selon la revendication 1, caractérisé en ce que les moyens de sécurité comportent un réservoir d'énergie de secours (15) et des moyens de connexion sélective de ce réservoir au moteur (1) de commande de la valve.

3. Agencement selon la revendication 2, caractérisé en ce que le réservoir d'énergie (15) est un dispositif de stockage d'énergie électrique ayant une capacité de stockage suffisante pour au moins assurer une fermeture ou ouverture complète de la valve, et une résistance interne suffisamment faible pour assurer une ouverture ou fermeture rapide de la valve.

4. Agencement selon la revendication 3, caractérisé en ce que le réservoir d'énergie (15) est un condensateur d'une capacité élevée.

5. Agencement selon la revendication 3, caractérisé en ce que le réservoir d'énergie est une batterie ou un accumulateur.

6. Agencement selon une des revendications 4 ou 5, caractérisé en ce que le dispositif électronique peut comprendre des moyens de surveillance de la source d'alimentation en énergie électrique externe (3) et du réservoir d'énergie de secours (10) ainsi que des moyens (12) de l'alimentation du moteur, sélectivement, à partir du réservoir (10).

7. Agencement selon la revendication 6, caractérisé en ce que le dispositif électronique (2) comporte un coeur numérique (6) tel qu'un micro-contrôleur, relié par un interface d'entrées/sorties (8) à la source d'énergie extérieur (3) et au dispositif de commande extérieur (4) de la valve, d'une part, et, d'autre part, par un interface de puissance (7) de commande du moteur, à ce dernier, et en ce que le réservoir d'énergie de secours (10) est relié par un interface de surveillance (11) au coeur numérique (6) et par une interface d'alimentation de secours (12) à l'interface de puissance (7).

8. Agencement selon la revendication 7, caractérisé en ce que le réservoir (10) est relié par une interface de charge et d'alimentation (13) à l'interface d'entrées/sorties (8) précitée.

9. Agencement selon l'une des revendications 6 à 8, caractérisé en ce que le dispositif électronique et réalisé sous forme d'une carte électronique.

10. Agencement selon l'une des revendications 7 à 9, caractérisé en ce que le coeur numérique (6) comporte des moyens d'interface d'entrée reliés à l'interface d'entrées/sorties (8), qui comporte des entrées analogique et numérique destinées à recevoir des informations sur l'état du dispositif de commande (4), l'information numérique représentative de l'état d'actionnement ou de non-actionnement du dispositif de commande étant prioritaire sur l'information analogique.

11. Agencement selon la revendication 10, caractérisé en ce que la valve est complètement fermée ou complètement ouverte lorsque le dispositif de commande n'est pas actionné.

12. Agencement selon l'une des revendications 7 à 11, caractérisé en ce que le coeur numérique (10) comporte des moyens d'inhibition des consignes externes en provenance du dispositif de commande extérieure (4), tant que le réservoir d'énergie (10) n'est pas capable d'assurer l'alimentation en énergie électrique pour la réalisation d'ouverture ou de fermeture complète de la valve.

13. Agencement selon l'une des revendications 7 à 12, caractérisé en ce que le coeur numérique comporte des moyens d'initialisation de tous les moyens après la première alimentation du dispositif électronique (2), en assurant la position zéro de la valve.

14. Agencement selon l'une des revendications 7 à 13, caractérisé en ce que le coeur numérique (6) comporte des moyens de sauvegarde de batterie, destinés à couper les consommateurs de l'énergie électrique du dispositif électronique (2) lorsque le moteur (1) n'est pas sollicité.

15. Agencement selon l'une des revendications 7 à 14, caractérisé en ce que le coeur numérique (6) comporte des moyens de transformation de l'entrée linéaire analogique en une entrée non linéaire pour améliorer la sensation de progressivité lors de la commande de la valve.

16. Agencement selon l'une des revendications 7 à 15, caractérisé en ce que le coeur numérique (6) comporte des moyens de contrôle de l'interface de puissance (7), ces moyens étant adaptés pour accomplir une fonction de commande à découpage dépendant du niveau d'alimentation de la source d'alimentation externe (3), pour assurer une vitesse de commande constante pour une consigne extérieure donnée indépendante du niveau de l'alimentation externe.
